# EUROPÄISCHE PATENTSCHRIFT

(11) **EP 1 047 164 B1**
(45) Veröffentlichungstag und Bekanntmachung des Hinweises auf die Patenterteilung: **09.01.2002**
(21) Anmeldenummer: 00107040.8
(22) Anmeldetag: 03.04.2000
(51) Int. Cl.: H01T 4/06, H01R 9/24

(54) **Überspannungsschutzmagazin**
Overvoltage arrestor magazine
Chassis limiteur de surtensions

(30) Priorität: 20.04.1999 DE 19917824
(43) Veröffentlichungstag der Anmeldung: 25.10.2000
(73) Patentinhaber: Quante Aktiengesellschaft, 42109 Wuppertal (DE)
(72) Erfinder: Denter, Friedrich Wilhelm, 44575 Castrop-Rauxel (DE); Wildner, Stefan, 60437 Frankfurt (DE); Edelmann, Wolfgang, 42111 Wuppertal (DE)
(74) Vertreter: HOFFMANN - EITLE

(56) Entgegenhaltungen:
- DE-A- 3 014 796
- DE-A- 19 617 114
- DE-U- 29 802 727

## Beschreibung

### Technisches Gebiet

Die Erfindung betrifft ein Überspannungsschutzmagazin gemäß dem Oberbegriff des Anspruchs 1.

In der Telekommunikationstechnik werden verbreitet Überspannungsschutzmagazine verwendet, die auf Einrichtungen, beispielsweise Anschlussleisten, der Telekommunikationstechnik aufgesetzt werden, um elektronische Bauteile oder Geräte, die an die genannte Einrichtung angeschlossen sind, vor Überspannungen zu schützen. Übliche Schutzmagazine weisen im Gegensatz zu einzelnen Doppeladern zugeordneten Schutzsteckern mehrere Überspannungsableiter auf und sind darüber hinaus so gestaltet, dass sie derart auf die zumeist leistenförmigen Einrichtungen der Telekommunikationstechnik aufgesteckt werden können, dass von sämtlichen Kontakten einer derartigen Einrichtung jeweils die anliegende Spannung abgegriffen wird. An die Abgreifkontakte sind Überspannungsableiter, die in das Überspannungsschutzmagazin einsetzbar sind, elektrisch leitend angeschlossen, so dass eine an dem Abgreifkontakt des Überspannungsschutzmagazins anliegende Überspannung auch an dem einzelnen Überspannungsableiter anliegt. Bei Überschreiten einer bestimmten Spannung löst der Überspannungsableiter aus und leitet die elektrische Energie auf Erde ab. Zu diesem Zweck besitzen die beschriebenen Überspannungsschutzmagazine eine Erdschiene, die jeweils mit dem Erdkontakt eines jeden Überspannungsableiters elektrisch leitend verbunden ist. Um die elektrische Energie auf Erde abzuleiten, ist schließlich ein sogenannter Erdabgriff vorhanden, der elektrisch leitend mit der Erdschiene verbunden ist und aus dem Gehäuse herausreicht, so dass er im aufgesteckten Zustand mit einem Trägersystem und somit mit Erde verbunden ist.

### Stand der Technik

Ein Überspannungsschutzmagazin gemäß dem Oberbegriff des Anspruchs 1 ist aus der DE 30 14 796 C3 bekannt. Dieses weist im wesentlichen die oben angeführten Merkmale auf, wobei der Erdabgriff mit der Erdschiene einstückig ausgebildet ist. Ferner ist die Gestaltung des Erdabgriffs an ein bestimmtes Trägersystem angepasst, so dass sich dieses Überspannungsschutzmagazin nur in Kombination mit diesem bestimmten Trägersystem einsetzen lässt.

Um ein Überspannungsschutzmagazin auch für andere Trägersysteme verwendbar zu machen, ist in der DE 298 02 727 vorgeschlagen, den Erdabgriff des Überspannungsschutzmagazins mit mehreren Kontakten zur Ausbildung einer leitenden Verbindung mit unterschiedlichen Trägersystemen zu versehen. Hierbei sind die Gestaltungsmöglichkeiten für den Erdabgriff begrenzt, so dass auch die Anzahl der Trägersysteme, bei denen ein derartiges Überspannungsschutzmagazin einsetzbar ist, begrenzt ist.

Aus der DE 196 17 114 C2 ist ein Erdungsmodul bekannt, in das vor dem endgültigen Zusammenbau des Gehäuses unterschiedliche Erdabgriffe einsetzbar sind. Das vollständige Modul ist folglich auch hinsichtlich eines Erdabgriffs an ein bestimmtes Trägersystem angepasst.

Schließlich ist aus der DE 92 03 970 U1 eine Schutzleiterreihenklemme bekannt, bei der ein einführbarer Stecker die Stromschiene, an welche die Schutzleiterdrähte angeschlossen sind, mit einer das Erdpotential führenden Tragschiene verbindet. Der Stecker ist lösbar angebracht, und es wird kein Hinweis darauf gegeben, dass der Stecker eine andere als die in der genannten Schrift gezeigte Form haben kann. Deshalb ist auch bei diesem bekannten Gegenstand, der sich auch hinsichtlich seiner Funktion von dem erfindungsgemäß zu verbessernden Überspannungsschutzmagazin unterscheidet, keine Anpassung an unterschiedliche Trägersysteme möglich.

### Darstellung der Erfindung

Der Erfindung liegt somit die Aufgabe zugrunde, ein Überspannungsschutzmagazin zu schaffen, das bei zahlreichen verschiedenen Trägersystemen einsetzbar ist.

Die Lösung dieser Aufgabe erfolgt durch die Merkmale des Patentanspruchs 1.

Demzufolge wird im Rahmen der Erfindung der völlig neue Weg beschritten, das Überspannungsschutzmagazin zunächst ohne Erdabgriff fertigzustellen und dieses so auszubilden, dass ein Erdabgriff an das - mit Ausnahme des Erdabgriffs - zusammengesetzte Überspannungsschutzmagazin derart anbringbar ist, dass ein Kontakt mit der Erdschiene ausgebildet wird. Mit anderen Worten kann das Überspannungsschutzmagazin ohne den Erdabgriff für zahlreiche Trägersysteme vereinheitlicht werden und es erhält erst durch das Anbringen eines an ein bestimmtes Trägersystem angepassten Erdabgriffs seine endgültige Ausbildung.

Hierdurch ergeben sich nicht nur wirtschaftliche Vorteile bei der Fertigung und der Lagerhaltung des vereinheitlichten Überspannungsschutzmagazins, sondern es sind darüber hinaus der Vielfalt der verwendbaren Erdabgriffe keine Grenzen gesetzt. Diese können beispielsweise eine unterschiedliche Länge aufweisen, so dass sie mit Trägersystemen, die sich auf unterschiedlichem Niveau bezüglich des aufgesteckten Überspannungsschutzmagazins befinden, kombinierbar sind. Als Trägersysteme sind beispielsweise die gängigen Wannen und Profile denkbar. Darüber hinaus ist an das erfindungsgemäße Überspannungsschutzmagazin auch ein Erdabgriff anbringbar, der gemäß der Lehre der DE 298 02 727 gestaltet und für unterschiedlich breite Trägersysteme geeignet ist. Die Variationsmöglichkeiten bei dem neuartigen Überspannungsschutzmagazin können auch dahingehend ausgenutzt werden, dass dieses zusammen mit einem Satz unterschiedlicher Erdabgriffe vertrieben wird und erst im Rahmen der Anbringung an eine Einrichtung der Telekommunikationstechnik mit dem jeweils passenden Erdabgriff versehen wird.

Bevorzugte Weiterbildungen sind in den weiteren Ansprüchen beschrieben.

So wird für die Anbringung des Erdabgriffs derzeit bevorzugt, dass dieser im angebrachten Zustand unlösbar mit dem Überspannungsschutzmagazin verriegelt ist. Dies bietet den Vorteil, dass beim Abnehmen des Überspannungsschutzmagazins von einer Einrichtung der Telekommunikationstechnik nicht die Gefahr besteht, dass der oder die Erdabgriffe ungewollt an dieser Einrichtung verbleiben, weil unter Umständen die zum Lösen von dem Trägersystem erforderliche Kraft größer ist als die Kraft, die für das Lösen von dem Überspannungsschutzmagazin erforderlich ist. In bestimmten Anwendungsfällen ist jedoch ebenso gut denkbar, den Erdabgriff derart an das Überspannungsschutzmagazin anbringbar zu gestalten, dass dieser von dem Magazin gelöst werden kann, so dass dieses durch Wechseln des Erdabgriffs auf ein anderes Trägersystem umrüstbar ist.

Für die Anbringung des Erdabgriffs hat es sich als vorteilhaft herausgestellt, diesen einrastbar auszubilden. Auf diese Weise gestaltet sich die Vollendung des erfindungsgemäßen Überspannungsschutzmagazins durch Anbringen der erforderlichen Erdabgriffe besonders einfach.

In diesem Zusammenhang ist es ferner von Vorteil, an dem Gehäuse des Überspannungsschutzmagazins einen Rasthaken vorzusehen, der in eine in dem Erdabgriff ausgebildete Aussparung einrastet, wenn der Erdabgriff an der vorgesehenen Stelle in das Überspannungsschutzmagazin eingeführt wird.

Schließlich wird für das Überspannungsschutzmagazin bevorzugt, dass es mit einem Satz unterschiedlicher Erdabgriffe kombiniert wird, die wahlweise, je nach den Erfordernissen, an dem Überspannungsschutzmagazin anbringbar sind.

### Kurze Beschreibung der Zeichnungen

Nachfolgend wird ein Ausführungsbeispiel der Erfindung unter Bezugnahme auf die beigefügten Zeichnungen näher erläutert.
Es zeigen:
- Fig. 1: eine Teil-Schnittansicht des erfindungsgemäßen Überspannungsschutzmagazins mit einer ersten Art eines Erdabgriffs;
- Fig. 2: eine Teil-Schnittansicht des erfindungsgemäßen Überspannungsschutzmagazins mit einer zweiten Art eines Erdabgriffs; und
- Fig. 3: eine Teil-Schnittansicht des erfindungsgemäßen Überspannungsschutzmagazins mit einer dritten Art eines Erdabgriffs.

### Ausführliche Beschreibung des bevorzugten Ausführungsbeispiels

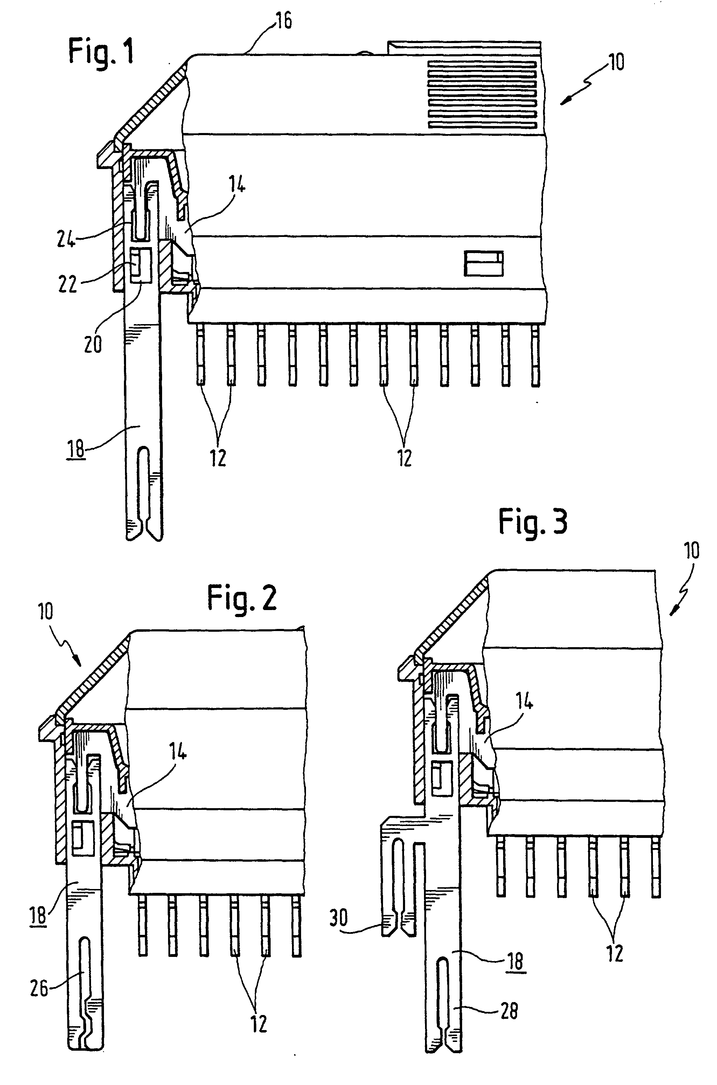

In Fig. 1 ist ein Abschnitt eines erfindungsgemäßen Überspannungsschutzmagazins 10 dargestellt, wobei der linke Rand in einer Schnittansicht gezeigt ist. An der (gemäß dem Einbauzustand) Rückseite des Überspannungsschutzmagazins 10 erstrecken sich zahlreiche Abgreifkontakte 12 in Richtung einer (nicht gezeigten) zumeist leistenförmigen Einrichtung der Telekommunikationstechnik, auf die das Überspannungsschutzmagazin 10 aufsteckbar ist. Mit den Abgreifkontakten 12 sind jeweils (nicht gezeigte) Überspannungsableiter elektrisch leitend verbunden.

Es ist ferner eine Erdungsschiene 14 vorgesehen, die mit dem jeweiligen Erdkontakt der Überspannungsableiter eine elektrisch leitende Verbindung herstellt. Gemäß dem Stand der Technik ist die Erdungsschiene 14 zumeist einstückig mit einem Erdabgriff ausgebildet. Der Erdabgriff erstreckt sich seitlich von den Abgreifkontakten 12 und der Einrichtung, auf die das Überspannungsschutzmagazin aufgesteckt ist, zu einem Trägersystem. Mit einem Element des Trägersystems wird ein elektrischer Kontakt zwischen dem Erdabgriff und dem Trägersystem ausgebildet, so dass in dem Fall, dass ein Überspannungsableiter ausgelöst hat, die elektrische Energie auf Erde abgeleitet werden kann. In dem gezeigten Fall ist der Erdabgriff 18 für die Kontaktierung der Seitenwand einer Trägerwanne angepasst.

Erfindungsgemäß ist der Erdabgriff 18, wie an seinem oberen Ende zu erkennen, von der Erdschiene 14 getrennt vorgesehen. In dem in Fig. 1 dargestellten Endzustand des Überspannungsschutzmagazins 10 ist er derart an dem Überspannungsschutzmagazin 10 angebracht, dass zwischen diesen Elementen ein elektrischer Kontakt besteht. Jedoch wird erfindungsgemäß das Überspannungsschutzmagazin 10 zunächst ohne den Erdabgriff 18 fertiggestellt, so dass unterschiedliche Erdabgriffe 18, von denen einige Ausführungsformen in den weiteren Figuren gezeigt sind und nachfolgend genauer erläutert werden, mit ein und demselben Überspannungsschutzmagazin 10 kombinierbar sind. Hierzu ist bei dem gezeigten Ausführungsbeispiel in dem Erdabgriff 18 im Bereich seines oberen Endes eine Aussparung 20 ausgebildet, die mit einer an dem Gehäuse 16 vorgesehenen Rastnase 22 derart zusammenwirkt, dass der Erdabgriff bei der Anbringung an das Überspannungsschutzmagazin 10 verrastet wird, und in diesem Zustand leitend mit der Erdschiene 14 in Verbindung steht. Zu diesem Zweck weist der Erdabgriff 18 bei dem gezeigten Ausführungsbeispiel an seinem oberen Ende einen Kontaktschlitz 24 auf, in dem sich in dem gezeigten Endzustand ein Abschnitt der Erdschiene 14 befindet.

Das in Fig. 2 dargestellte Überspannungsschutzmagazin ist mit Ausnahme des eingerasteten Erdabgriffs 18 mit dem in Fig. 1 gezeigten identisch. Dieses kann somit gemäß der Erfindung vereinheitlicht werden und je nach Bedarf mit unterschiedlichen Erdabgriffen 18 bestückt werden. Bei dem in Fig. 2 gezeigten Fall handelt es sich um einen Erdabgriff, der einen etwas anders gestalteten Kontaktschlitz 26 zur Kontaktierung eines Trägersystems aufweist. Wie aus der Figur zu erkennen ist, sind die an den Kontaktschlitz 26 anliegenden Kanten am unteren Ende parallel zueinander etwas wellenförmig gestaltet. Des weiteren ist der in Fig. 2 dargestellte Erdabgriff 18 kürzer als der in Fig. 1 dargestellte und eignet sich somit für die Verwendung mit einer Einrichtung der Telekommunikationstechnik, die nach Anbringung auf dem Trägersystem eine geringere Höhe aufweist als bei der in Fig. 1 gezeigten Situation. Deshalb reicht ein kürzerer Erdabgriff 18 aus, um eine elektrisch leitende Verbindung mit einem Abschnitt des Trägersystems herzustellen.

In Fig. 3 ist schließlich wiederum das gleiche Überspannungsschutzmagazin 10 dargestellt, das in diesem Fall mit einem Erdabgriff einer dritten Ausführungsform bestückt wurde. Wie aus der Figur ohne weiteres zu erkennen ist, weist der Erdabgriff 18 in diesem Ausführungsbeispiel zwei Kontakte 28 und 30 auf, wobei der Kontakt 28 im wesentlichen der Ausbildung des in Fig. 1 gezeigten Erdabgriffs 18 entspricht. An diesen Kontakt 28 ist seitlich und etwa auf halber Höhe ein weiterer Kontakt 30 angeformt. In dieser Ausführungsform eignet sich das um den Erdabgriff 18 vervollständigte Überspannungsschutzmagazin 10 für zwei unterschiedliche Trägersysteme, die sich hinsichtlich ihrer Höhe und der Breite unterscheiden. Mit dem außerhalb des ersten Kontakts 28 vorgesehenen Kontakt 30 ist der Erdabgriff 18 und damit letzten Endes die Erdkontakte der in das Magazin 10 eingesetzten Überspannungsableiter mit einem breiteren Trägersystem und damit mit Erde verbindbar.

Für alle gezeigten Ausführungsformen gilt, dass üblicherweise auch an dem anderen seitlichen Rand, der in den Figuren weggelassen ist, der jeweils gezeigte Erdabgriff 18 eingesetzt ist, so dass sich das fertige Überspannungsschutzmagazin 10 für die Kontaktierung eines symmetrischen Trägersystems an beiden seitlichen Rändern eignet. Es sei nochmals erwähnt, dass in den Figuren ein vollständiges Überspannungsschutzmagazin gezeigt ist, das jedoch erst in einem - mit Ausnahme des Erdabgriffs 18 - fertigen Zustand mit dem jeweils geeigneten Erdabgriff 18 versehen wird.

## Patentansprüche

1. Überspannungsschutzmagazin (10) für eine Einrichtung der Telekommunikationstechnik, mit:
- einem Gehäuse (16),
- mehreren Überspannungsableitern, die jeweils einen Erdkontakt aufweisen, und
- einer Erdschiene (14), die mit den Erdkontakten leitend verbunden ist,
**dadurch gekennzeichnet, dass**
zumindest ein Erdabgriff (18) an das - mit Ausnahme des Erdabgriffs (18) - vollständig zusammengesetzte Überspannungsschutzmagazin (10) nachträglich derart anbringbar ist, dass ein Kontakt mit der Erdschiene (14) ausgebildet wird.

2. Überspannungsschutzmagazin nach Anspruch 1,
**dadurch gekennzeichnet, dass**
der Erdabgriff (18) derart anbringbar ist, dass er unlösbar an dem Überspannungsschutzmagazin (10) verriegelt ist.

3. Überspannungsschutzmagazin nach Anspruch 2,
**dadurch gekennzeichnet, dass**
der Erdabgriff (18) einrastbar ist.

4. Überspannungsschutzmagazin nach Anspruch 3,
**dadurch gekennzeichnet, dass**
das Gehäuse (16) zumindest einen Rasthaken (22) aufweist.

5. Überspannungsschutzmagazin nach zumindest einem der vorangehenden Ansprüche,
mit einem Satz unterschiedlicher Erdabgriffe (18), die wahlweise an das Überspannungsschutzmagazin (10) anbringbar sind.

## Claims

1. Surge voltage suppresser magazine (10) for a device used in the telecommunications industry, having:
- a housing (16),
- a plurality of surge voltage suppresser diverters which in each case have an earth contact, and
- an earth rail (14) which is connected to the earth contacts in a conducting manner,
**characterised in that**
at least one earth pick-off (18) can be additionally applied to the completely assembled surge voltage suppresser magazine (10) - with the exception of the earth pick-off - in such a way that a contact with the earth rail (14) is established.

2. Surge voltage suppresser magazine according to claim 1,
**characterised in that**
the earth pick-off (18) can be applied in such a way that it is non-releasably locked to the surge voltage suppresser magazine (10).

3. Surge voltage suppresser magazine according to claim 2,
**characterised in that**
the earth pick-off (18) can be notched into place.

4. Surge voltage suppresser magazine according to claim 3,
**characterised in that**
the housing (16) has at least one notch hook (22).

5. Surge voltage suppresser magazine according to at least one of the preceding claims,
with a set of different earth pick-offs (18) which can be selectively applied to the surge voltage suppresser magazine (10).

## Revendications

1. Châssis limiteur de surtensions (10) pour un équipement appartenant à la technique de télécommunication, comportant :
- un boîtier (16),
- une pluralité de conducteurs d'évacuation de surtensions présentant chacun un contact de terre, et
- une barre de terre (14) reliée de façon conductrice aux contacts de terre,
**caractérisé en ce qu'**
au moins un prélèvement de terre (18) est susceptible d'être montée après coup sur le châssis limiteur de surtensions (10) complètement assemblé - à l'exception du prélèvement de terre (18) - de manière à constituer un contact avec la barre de cerre (14).

2. Châssis limiteur de surtensions selon la revendication 1, **caractérisé en ce que** le prélèvement de terre (18) est susceptible d'être monté de manière à être verrouillé de façon indésolidarisable sur le châssis limiteur de surtensions (10).

3. Châssis limiteur de surtensions selon la revendication 2, **caractérisé en ce que** le prélèvement de terre (18) est encliquetable.

4. Châssis limiteur de surtensions selon la revendication 3, **caractérisé en ce que** le boîtier (16) présente au moins un crochet d'encliquetage (22).

5. Châssis limiteur de surtensions selon au moins l'une des revendications précédentes, avec un jeu de prises de terre (18) différentes, susceptibles d'être montées au choix sur le châssis limiteur de surtensions (10).
